# EUROPÄISCHE PATENTSCHRIFT

(11) **EP 3 178 596 B1**
(45) Veröffentlichungstag und Bekanntmachung des Hinweises auf die Patenterteilung: **09.10.2019**
(21) Anmeldenummer: 15199186.6
(22) Anmeldetag: 10.12.2015
(51) Int. Cl.: B23K 9/133, B65H 51/10

(54) **DRAHTVORSCHUBANTRIEB FÜR EINEN SCHWEISSDRAHT**
WIRE ADVANCING DRIVE FOR A WELDING WIRE
ENGRENAGE D'AVANCE POUR UN FIL DE SOUDURE

(43) Veröffentlichungstag der Anmeldung: 14.06.2017
(73) Patentinhaber: Dinse G.m.b.H., 22419 Hamburg (DE)
(72) Erfinder: RATHKE, Thomas, 22851 Norderstedt (DE)
(74) Vertreter: Raffay & Fleck

(56) Entgegenhaltungen:
- BE-A- 518 578
- FR-A- 1 414 324
- US-A- 3 529 127
- US-B2- 7 026 574

## Beschreibung

Die vorliegende Erfindung betrifft einen Drahtvorschubantrieb für das Fördern eines Schweißdrahtes in dessen Längsrichtung und in Zuführrichtung, gemäß dem Oberbegriff des Anspruchs 1, wie z.B. aus der BE 518 578 A bekannt.

Derartige Drahtvorschubantriebe sind bekannt und umfassen typischerweise wenigstens zwei einander entlang einer Drahtförderstrecke gegenüberliegende, mit radialen Umfangsflächen zum Angreifen an einem zu fördernden Schweißdraht an jeweils einer Seite des Schweißdrahtes ausgebildete, um senkrecht zu der Zuführrichtung orientierte und zueinander parallele Rotationsachsen drehbare Förderrollen, von denen wenigstens eine durch einen Antriebsmotor zur Rotation um die Rotationsachse antreibbar ist. Solche Drahtvorschubantriebe werden standardmäßig sowohl zum Fördern von Schweißdraht in Handschweißpistolen, beispielsweise solchen für das Schutzgasschweißen, als auch im Zusammenhang mit Schweißrobotern eingesetzt. Hier sind die bekannten Drahtvorschubantriebe in der Regel vergleichsweise groß dimensioniert und dienen dem Fördern von Endloschargen eines Schweißdrahtes von Schweißdrahtrollen mit entsprechend großen Längen dieses Materials. Schweißdrahtrollen können dabei ohne weiteres Schweißdraht mit einer Gesamtlänge von einigen 100 Metern fassen, die - wenn der Schweißdraht einmal in den Drahtvorschubantrieb eingefädelt ist - kontinuierlich im Schweißprozess verarbeitet und verbraucht werden.

Entsprechend ist es nur vergleichsweise selten erforderlich, einen neuen Schweißdraht in den Drahtvorschubantrieb einzulegen. Entsprechend sind bekannte Systeme denn auch so gebildet, dass für das Einlegen eines neuen Schweißdrahtes in den Drahtvorschubantrieb dieser Drahtvorschubantrieb zu öffnen ist, typischerweise wird ein Gehäusebestandteil entfernt oder geöffnet, der Schweißdraht dann in das die Förderrollen aufweisende Fördersystem eingefädelt und der Drahtvorschubantrieb wird dann wieder verschlossen und in Betrieb genommen. Bei der Verwendung von Endlosschweißdraht, der von der Rolle entnommen wird, ist dies unproblematisch, da, wie bereits erwähnt, ein entsprechender Austausch bzw. ein Nachfädeln eines neuen Schweißdrahtes nur vergleichsweise selten vorgenommen werden muss.

Nun gibt es aber aktuell einen Bedarf, neben klassischen Schutzgasschweißsystemen, die mit Endlosschweißdraht arbeiten, auch kleinere Kompaktsysteme mit Drahtvorschubantrieben auszurüsten, so insbesondere, aber nicht nur, handgehaltene, vergleichsweise klein dimensionierte, Laserschweißsysteme, die dann insbesondere auch mit kürzeren Schweißdrahtabschnitten, beispielsweise solchen von etwa 10-30 cm Länge, bestückt und betrieben werden. Für derartige Systeme ist dann selbstverständlich ein häufigeres Nachführen und Einfädeln eines neuen Schweißdrahtabschnittes erforderlich.

Aus diesem Grunde erweisen sich die bekannten Drahtvorschubantriebe hier als unpraktisch und im Betrieb unwirtschaftlich, da ein wie dort typischerweise vorzunehmendes komplexes Zerlegen und Öffnen des Antriebes für das Einlegen eines neuen Schweißdrahtabschnittes zu zeitaufwendig ist, die Gebrauchszeiten der angestrebten, mit kurzen Schweißdrahtabschnitten arbeitenden Schweißgeräte in unwirtschaftlicher Weise reduzieren würde.

Darüber hinaus wird hier auch eine Miniaturisierung der Schweißpistolen mit vorzugsweise in diese integrierbaren Drahtvorschubantrieben angestrebt, so dass die hierfür erforderlichen Drahtvorschubantriebe gegenüber den bekannten Systemen deutlich kleiner zu dimensionieren und mit Vorteil in kompakte Gehäusesysteme für handgehaltene oder auch robotisch betriebene Schweißarmaturen integrierbar auszugestalten sind. Auch eine solche Integration in vergleichsweise kompakte Gehäuse verbietet ein regelmäßiges Öffnen und Zerlegen dieses Gehäuses für das Einlegen eines neuen Schweißdrahtabschnittes.

Entsprechend bestand die der vorliegenden Erfindung zugrundeliegende Aufgabe darin, einen verbesserten Drahtvorschubantrieb für das Bewegen eines Schweißdrahtes, insbesondere eines Schweißdrahtabschnittes, anzugeben, der ein einfaches Einfädeln eines neuen Schweißdrahtes bzw. Schweißdrahtabschnittes in den Drahtvorschubantrieb ohne ein aufwendiges Zerlegen oder Teilzerlegen des Drahtvorschubantriebes gestattet und der sich insbesondere verglichen mit bekannten Drahtvorschubantrieben in deutlich kleineren Dimensionen bilden und so in kompakte Gehäuse von Schweißarmaturen, insbesondere handgehaltenen Schweißpistolen, auch Laserschweißpistolen, integrieren lässt.

Diese Aufgabe wird erfindungsgemäß gelöst durch einen Drahtvorschubantrieb mit den Merkmalen des Anspruches 1. Vorteilhafte Weiterbildungen eines solchen erfindungsgemäßen Drahtvorschubantriebes sind in den abhängigen Ansprüchen 2 bis 9 bezeichnet.

Erfindungsgemäß hat also ein neuartig gestalteter Drahtvorschubantrieb für das Fördern eines Schweißdrahtes in dessen Längsrichtung und in Zuführrichtung wenigstens zwei einander entlang einer Drahtförderstrecke gegenüberliegende, mit radialen Umfangsflächen zum Angreifen an einem zu fördernden Schweißdraht an jeweils einer Seite des Schweißdrahtes ausgebildete Förderrollen, die jeweils um eine senkrecht zu der Zuführrichtung orientierte Rotationsachsen drehbar sind, wobei die Rotationsachsen der Zuführrollen zueinander parallel verlaufen. Wenigstens eine der Förderrollen ist dabei durch einen Antriebsmotor zur Rotation um ihre Rotationsachse antreibbar. Weiterhin ist eine erste der wenigstens zwei Förderrollen in einem ersten Lagerteil zum Drehen um ihre Rotationsachse gelagert, ist eine zweite der wenigstens zwei Förderrollen in einem zweiten Lagerteil zum Drehen um ihre Rotationsachse gelagert. Die genannten Lagerteile, also das erste und das zweite Lagerteil, sind relativ zueinander um ein Scharniergelenk schwenkbar, dessen Scharnierachse zu den Rotationsachsen parallel verläuft. Die beiden Lagerteile sind mittels einer Andruckkraft in einer solchen Weise vorgespannt, dass die radialen Außenflächen der Förderrollen aufeinander zu gezwungen werden. Schließlich sind die Rotationsachsen der wenigstens zwei Förderrollen in der Zuführrichtung gesehen hinter dem Scharniergelenk positioniert.

Der vorstehende beschriebene, erfindungsgemäße Drahtvorschubantrieb kann aufgrund der über das Scharniergelenk miteinander verschwenkbar verbundenen Lagerteile, an denen die erste bzw. die zweite Förderrolle gelagert sind, einfach von einer Rückseite her durch Einschieben eines Schweißdrahtabschnittes in Förderrichtung und entlang der Drahtförderstrecke bestückt und mit diesem neuen Schweißdrahtabschnitt gespeist werden. Denn der einfach von dieser Rückseite her in den Drahtvorschubantrieb eingeschobene Schweißdrahtabschnitt gelangt nun mit einem vorderen Ende mit den Umfangsflächen der ersten und der zweiten Förderrolle in Eingriff, wobei durch den Antrieb der wenigstens einen angetriebenen Förderrolle der Schweißdraht ergriffen und zwischen den einander gegenüberliegenden Umfangsflächen der beteiligten Förderrollen gefangen und nun in Förderrichtung transportiert wird. Dabei kann aufgrund des Scharniergelenkes eine Spreizung der beiden Lagerteile durch Verschwenken um das Scharniergelenk erfolgen, was insbesondere dadurch ermöglicht ist, dass das Scharniergelenk in Förderrichtung gesehen hinter den Förderrollen angeordnet ist, so dass sich eine der Förderrichtung folgende Spreizbewegung ergibt. Diese Bauweise erlaubt also ein Bestücken des Drahtvorschubantriebes mit einem Schweißdrahtabschnitt ohne das bei bekannten Drahtvorschubantrieben erforderliche Zerlegen oder zumindest Öffnen eines Gehäuses des Schweißdrahtantriebes und manuelles Einfädeln des Schweißdrahtes in den Drahtvorschubantrieb, insbesondere zwischen die Förderrollen. Zudem kann, insbesondere dann, wenn der Drahtvorschubantrieb auf einen solchen mit genau zwei Förderrollen beschränkt wird, eine besonders kompakte Bauweise erreicht werden, die dann z.B. über Handstücke für Schweißpistolen, insbesondere auch Laserschweißpistolen, integriert werden kann. Der von 90° verschiedene Winkel, unter dem die zwischen den Rotationsachsen gezogene Verbindungslinie die Zuführrichtung schneidet, kann insbesondere zwischen 80° und 89,5°, vorzugsweise zwischen 85° und 89,5° betragen, z.B. bei etwa 89° liegen.

Die erste und die zweite Förderrolle mit ihren Rotationsachsen sind derart angeordnet, dass eine Verbindungslinie zwischen den Rotationsachsen die Zuführrichtung unter einem von 90° verschiedenen Winkel schneidet. Diese Maßnahme erlaubt nicht nur eine hinsichtlich der Baubreite schmalere Bauweise, sondern verschafft insbesondere im Hinblick auf das Einfädeln eines Schweißdrahtabschnittes eine verbesserte Wirkung, da dieser zunächst von der Umfangsfläche einer ersten der beiden Förderrollen erfasst wird, bevor er dann gegen die Umfangsfläche der zweiten der beiden Förderrollen gedrückt und so mitgenommen wird. Die beschriebene Konstruktion bedingt nämlich auch, dass in einer senkrechten Projektion auf die Förderstrecke bzw. Förderrichtung gesehen eine der beiden Rotationsachsen vor der anderen Rotationsachse angeordnet ist, dass also eine der beiden Förderrollen, erste und zweite Förderrolle, in Zuführrichtung gesehen vor einer anderen der beiden Förderrollen, erste und zweite Förderrolle, positioniert ist. Mit Vorteil ist dabei die in Förderrichtung gesehen zuerst positionierte Förderrolle eine solche, die durch den Antrieb antreibbar ist, so dass der eingefädelte Schweißdrahtabschnitt zunächst gegen eine angetriebene Förderrolle geführt und dabei dann erfasst und mitgenommen wird.

Eine weitere vorteilhafte Weiterbildung der Erfindung sieht vor, dass von den Antriebsrollen genau eine, nämlich die erste Förderrolle von dem Antrieb zur Rotation um ihre Rotationsachse antreibbar ist und dass die zweite Förderrolle antriebslos und frei um ihre Rotationsachse drehbar ist. Einerseits kann damit Bauaufwand und Bauraum gespart werden, indem lediglich ein Antrieb, z.B. ein unmittelbar auf die Rotationsachse der ersten Förderrolle wirkender Antriebsmotor, vorgesehen ist. Andererseits ergeben sich dabei keine Probleme hinsichtlich einer Korrelation und Abstimmung mehrerer Antriebe, da so lediglich die erste Förderrolle angetrieben ist, die zweite Förderrolle einfach in einer angepassten Rotationsgeschwindigkeit mitdreht.

In der wie vorstehend bezeichneten vorteilhaften Weiterbildung ist weiterhin möglich und wird bevorzugt, dass das erste Lagerteil in Bezug auf die Förderstrecke feststehen, das zweite Lagerteil als relativ zu dem ersten Lagerteil und relativ zu der Förderstrecke um das Scharniergelenk verschwenkbarer Lagerarm gebildet ist. Diese Gestaltung bedingt einerseits, dass der Antrieb nicht mit verschwenkt werden muss, dass die angetriebene Förderrolle in Bezug auf die Förderstrecke feststehend ist, und andererseits, dass lediglich die passive Förderrolle durch Verschwenken des Lagerarms und entgegen die Andruckkraft ausweichen und verlagert werden kann.

Ist die zweite Förderrolle eine passive, so kann diese mit Vorteil mit einem Rotations-Weg-Sensor, z.B. einem optischen Drehgeber, verbunden sein. Ein solcher Sensor kann von einer Steuerung ausgewertet werden, um die Zustelllänge eines Schweißdrahtabschnittes zu detektieren und damit eine für den durchzuführenden Schweißprozess angepasste Zustellung von Schweißdraht und entsprechende Materialzufuhr zu gewährleisten.

Eine weitere vorteilhafte Weiterbildung des erfindungsgemäßen Drahtvorschubantriebes ist darin zu sehen, dass im Bereich der Förderrollen ein, insbesondere kapazitiv wirkender, Drahtsensor mit einem hin zu der Förderstrecke wirkenden Sensorbereich angeordnet sein kann. Dieser Drahtsensor kann einer Steuerung des Drahtvorschubantriebes insbesondere ein Signal zur Verfügung stellen, wenn ein Schweißdraht in dem Drahtvorschubantrieb befindlich ist, bzw. wenn kein Schweißdraht mehr im Sensorbereich ist, z.B. wenn ein eingelegter Schweißdrahtabschnitt verbraucht ist. Insbesondere kann der Drahtsensor dabei in Förderrichtung gesehen vor den Förderrollen angeordnet sein, so dass er beim Einlegen eines neuen Schweißdrahtabschnittes diesen im Sensorbereich erkennen und auf ein entsprechendes Signal des Drahtsensors hin z.B. der Antrieb für die angetriebene Förderrolle (die angetriebenen Förderollen) gestartet werden kann, um so das automatische Einfädeln des Schweißdrahtabschnittes zu betreiben.

Für einen besseren Angriff der angetriebenen Förderrolle an dem Schweißdraht, kann diese eine umfangsseitige Rändelung aufweisen. Eine solche Rändelung kann prinzipiell auch eine nicht angetriebene, freilaufende Förderrolle aufweisen, wobei eine solche Förderrolle auch mit einer glatten Oberfläche an ihrer Umfangsfläche gebildet sein kann.

Weiterhin kann mit Vorteil vorgesehen sein, dass der erfindungsgemäße Drahtvorschubantrieb eine Drahtführung zum Halten und Führen des zu bewegenden Schweißdrahtes entlang der Förderstrecke aufweist. Eine solche Drahtführung kann z.B. durch eine Drahtführungshülse oder ein Drahtführungsrohr gebildet sein, in welche(s) der Schweißdraht oder ein Schweißdrahtabschnitt eingeführt und damit zuverlässig entlang der Förderstrecke in der Zuführrichtung in den Drahtvorschubantrieb eingebracht und von diesem entsprechend weiterbefördert werden kann. Ein solches Rohr kann insbesondere auf der in Förderrichtung gesehen rückwärtigen Seite des Drahtvorschubantriebes vorgesehen sein. Auf einer in Förderrichtung vorn gelegenen Seite kann eine weitere Einrichtung einer Drahtführung vorgesehen sein, z.B. eine in einem Führungsblock befindliche Führungsöffnung, die den Austritt entlang der Drahtführungsstrecke und in der Förderrichtung definiert und bestimmt. Für eine zuverlässigere Einfädelung eines Schweißdrahtes in den Drahtvorschubantrieb kann die Drahtführung einen Führungsabschnitt aufweisen, der zugeführten Schweißdraht bis in den Bereich der Förderrollen führt und in Drahtzuführrichtung vor den Förderrollen mündet.

Um insbesondere für eine Anpassung des Drahtvorschubantriebes an unterschiedliche Schweißdrähte, z.B. Schweißdrähte unterschiedlichen Materials oder unterschiedlicher Stärke, vornehmen zu können, kann mit Vorteil eine Stelleinrichtung zum Einstellen der Andruckkraft, mit der die beiden Lagerteile vorgespannt sind, vorgesehen sein. Eine solche Stelleinrichtung kann, wenn ein Andruckmittel in Form einer Feder vorgesehen ist, z.B. eine Stellschraube sein, mit der ein Stützlager für ein Ende einer solchen Feder positionsverstellt werden kann.

Wenn vorstehend von einer Zuführrichtung des Schweißdrahtes die Rede ist, so ist damit diejenige Richtung gemeint, in die der Schweißdraht der eigentlichen Schweißstelle zugeführt wird. Damit ist jedoch nicht einhergehend, dass der erfindungsgemäße Drahtvorschubantrieb einen Schweißdraht ausschließlich in dieser Zuführrichtung bewegen kann. Vielmehr kann, und wird dies in vielen Fällen auch, der Drahtvorschubantrieb für ein wechselseitiges Vor- und Rückbewegen des Schweißdrahtes bzw. der Schweißdrahtabschnittes ausgebildet sein, z.B. um auch gepulste Schweißanwendungen durchführen zu können, bei denen typischerweise der Schweißdraht für einen Schweißpuls der Schweißstelle zugeführt und am Ende des Schweißpulses von dieser wieder zurückgezogen wird.

Ferner gilt es, hier noch einmal klarzustellen, dass der erfindungsgemäße Drahtvorschubantrieb nicht nur für das Zuführen kurzer Schweißdrahtabschnitte geeignet ist, sondern natürlich auch Endlosmaterial von der Rolle fördern kann.

Weitere Vorteile und Merkmale der Erfindung ergeben sich aus der nachfolgenden Beschreibung eines Ausführungsbeispiels anhand der beigefügten Figuren. Dabei zeigen:
- Fig. 1: eine Aufsicht auf einen erfindungsgemäßen Drahtvorschubantrieb mit Darstellung der in dieser Aufsicht erkennbaren wesentlichen Elemente (ohne eine Hausung);
- Fig. 2: eine isometrische Ansicht des in Fig. 1 dargestellten Drahtvorschubantriebes von der in Fig. 1 oben angeordneten Seite her; und
- Fig. 3: eine isometrische Ansicht des Drahtvorschubantriebes von der gegenüberliegenden, in Fig. 1 unten angeordneten Seite her.

Die Figuren zeigen einen erfindungsgemäßen Drahtvorschubantrieb mit den für die Umsetzung der erfindungswesentlichen Aspekte relevanten Elementen. Die Figuren sind dabei nicht etwa maßstabsgerecht, sondern vielmehr als Prinzipskizzen zu verstehen, deren Darstellung sich auf die wesentlichen Elemente des erfindungsgemäßen Drahtvorschubantriebes in dieser Ausgestaltungsvariante beschränkt. Zudem stellen die Figuren und stellt die nachfolgende Beschreibung lediglich ein Ausführungsbeispiel für einen erfindungsgemäßen Drahtvorschubantrieb dar, ohne dass dieses Ausführungsbeispiel etwa eine beschränkende Wirkung im Hinblick auf die allgemeine und breite Definition eines nach der Erfindung gebildeten Drahtvorschubantriebes darstellt, wie er insbesondere in Anspruch 1 und auch noch in den vorteilhaften Weiterbildungen gemäß der Ansprüche 2 bis 9 bezeichnet ist.

In den Figuren ist ein erfindungsgemäßer Drahtvorschubantrieb allgemein mit der Bezugsziffer 1 bezeichnet. Dieser Drahtvorschubantrieb 1 verfügt zunächst über ein erstes Lagerteil 2 und ein zweites Lagerteil 3, welches als Lagerarm ausgebildet ist. Das Lagerteil 3, also der Lagerarm, ist mit dem Lagerteil 2 über ein Scharniergelenk 4, welches um eine senkrecht zu der mit dem Pfeil R angedeuteten Zuführrichtung liegende Scharnierachse gebildet ist, an dem Lagerteil 2 schwenkbar festgelegt. Das Lagerteil 2 ist dabei in Bezug auf die Drahtförderstrecke, die entlang der Zuführrichtung R verläuft, fest, das als Lagerarm gebildete Lagerteil 3 gegenüber dieser Richtung verschwenkbar ausgebildet. Eine Drehfeder 5 übt eine Andruckkraft auf das Lagerteil 3 aus und drückt dieses in Richtung des Lagerteils 2. Die Andruckkraft der Drehfeder 5 ist mittels einer Stellschraube, die gegen ein Lagerelement, gegen das die Drehfeder 5 gelagert ist, drückt (Stellschraube und Lagerelement hier nicht dargestellt) hinsichtlich der durch die Drehfeder 5 ausgeübten Andruckkraft einstellbar.

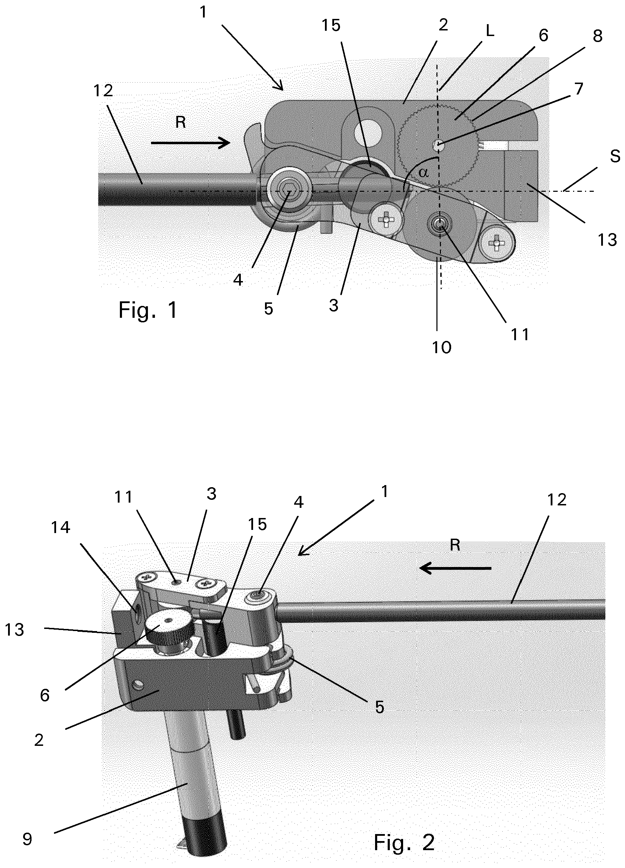

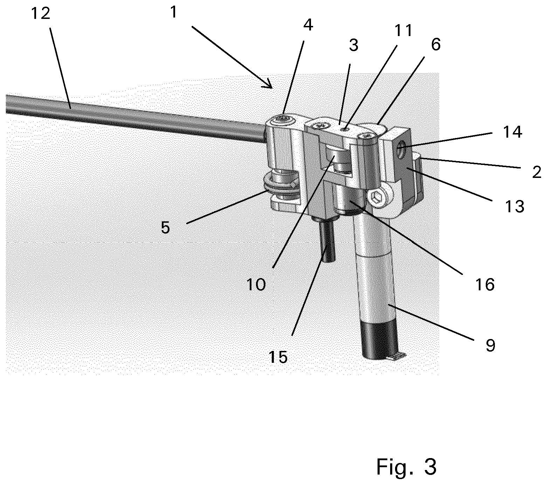

An dem ersten Lagerteil 2 ist eine angetriebene Förderrolle 6 um eine Rotationsachse 7 verdrehbar angeordnet. Diese angetriebene Förderrolle 6 weist auf ihrer außen liegenden Umfangswand eine gerändelte Oberfläche 8 auf. Diese angetriebene Förderrolle 6 wird durch einen Antriebsmotor 9 (vgl. Figuren 2, 3), der die Rotationsachse 7 unmittelbar antriebt, zur Rotation angetrieben.

An dem als Lagerarm ausgebildeten zweiten Lagerteil 3 ist ebenfalls eine Förderrolle 10 gelagert, die eine passive, d.h. nicht angetriebene Förderrolle ist. Diese Förderrolle 10 ist an dem Lagerteil 3 um ihre Rotationsachse 11 drehbar gelagert. Eine Verbindungslinie L, die die beiden Rotationsachsen 7, 11 der Förderrollen 6, 10 verbindet, schneidet die entlang der Zuführrichtung R verlaufende Förderstrecke S unter einem Winkel α, der von einem rechten Winkel abweicht, hier insbesondere kleiner ist als 90°. Insoweit steht die erste Förderrolle 6 auf die Drahtzuführstrecke S projiziert mit ihrer Rotationsachse 7 in Förderrichtung gesehen vor der Förderrolle 10 in gleicher Projektion. Der Winkel α kann insbesondere zwischen 80° und 89,5°, vorzugsweise zwischen 85° und 89,5° liegen. In einer wie in den Figuren gezeigten Ausgestaltungsvariante betrug er 89,1°.

Ein Drahtführungsrohr 12 führt von einer in der Zuführrichtung gesehen rückwärtigen Seite her in das Innere des Drahtvorschubantriebes 1 und mündet in einem Bereich, in dem die Umfangsflächen der Förderrollen 6, 10 einander berühren bzw. einander unmittelbar gegenüberliegen. In der Drahtzuführrichtung R gesehen hinter den Förderrollen 6, 10 ist ein Führungsblock 13 mit einer darin gebildeten Drahtführungsöffnung 14 gebildet, durch die hindurch der mit dem Drahtvorschubantrieb 1 in der Zuführrichtung R geförderte Schweißdraht weitertransportiert wird und die zusammen mit dem Drahtführungsrohr 12 die Drahtführung für den Schweißdraht bildet, um diesen auf der Drahtförderstrecke S zu halten und entlang dieser zu führen.

In den Figuren 2 und 3 sind dann noch ein Drahtsensor 15, der in einem Bereich in Zuführrichtung R gesehen unmittelbar vor den Förderrollen 6, 10 angeordnet ist und der Detektion eines in diesem Bereich befindlichen Schweißdrahtes dient, und ein mit der Rotationsachse 11 der passiven Förderrolle 10 verbundener optischer Drehgeber 16 zur Ermittlung eines Förderweges des Schweißdrahtes zu erkennen.

Die Besonderheit des in diesem Ausführungsbeispiel gezeigten Drahtvorschubantriebes 1 liegt neben der mit nur zwei Förderrollen 6, 10 und einer engen Platzierung der einzelnen Bauteile erreichten kompakten und mit geringen Ausmaßen versehenen Bauweise insbesondere darin, dass dieser ein selbsteinfädelnder Drahtvorschubantrieb ist, der für das Einlegen eines Schweißdrahtes kein manuelles Öffnen eines Gehäuses bzw. ein manuelles Auseinanderdrücken von Antriebsrollen und Einfädeln des Schweißdrahtes erfordert. Erreicht wird dies zum einen durch die Ausgestaltung der beiden Lagerteile 2, 3 mit den in Zuführrichtung R gesehen vor den Förderrollen 6, 10 gelegenen Scharniergelenk 4, um welches das als Förderarm gebildete Lagerteil 3 relativ zu dem feststehenden Lagerteil 2 verschwenkt werden kann, wobei dieses Scharniergelenk 4 insbesondere auf der Achse der Drahtförderstrecke S liegt. Durch diese Bauweise kann ein durch das Drahtführungsrohr 12 in Richtung eines Einfädelbereiches zwischen den Förderrollen 6, 10 vorgeschobener Schweißdraht bzw. Schweißdrahtabschnitt von den Förderrollen 6, 10 ergriffen werden, drückt dabei das als Lagerarm gebildete Lagerteil 3 nach außen, so dass dieses in Fig. 1 gesehen entgegen dem Uhrzeigersinn verschwenkt, zugleich aber eine durch die Drehfeder 5 aufgeprägte Andruckkraft gegen den Schweißdraht ausübt, so dass dieser sicher von der angetriebenen Förderrolle 6 ergriffen und weiter in Richtung der Drahtführungsöffnung 14 und durch diese hindurch gefördert wird, so also ein automatisches Einfädeln erfolgt. Dieser Effekt wird weiterhin dadurch begünstigt, dass der Schnittwinkel α zwischen der Verbindungslinie L der beiden Rotationsachsen 7, 11 der Förderrollen 6, 10 von 90° verschieden ist, dass dadurch insbesondere der vordere Schweißdrahtabschnitt eines neu eingeführten Schweißdrahtes bzw. eines Schweißdrahtstückes zunächst von der angetriebenen Förderrolle 6 ergriffen, sodann gegen die Gegendruckrolle, die Förderrolle 10, gedrückt und so in eine für die weitere Förderung des Schweißdrahtes benötigte Klemmführung überführt wird.

Das in den dargestellten Figuren gezeigte und vorstehend beschriebene Ausführungsbeispiel eines Drahtvorschubantriebes 1 eignet sich aufgrund seiner kompakten Bauweise und aufgrund der selbsteinfädelnden Eigenschaften insbesondere für einen Verbau in kompakt dimensionierten Handschweißgeräten, insbesondere Handschweißpistolen, aber auch in klein dimensionierten Roboterschweißbrennern, und kann mit besonderem Vorteil nicht nur mit Endlosschweißdraht von einer Rolle bestückt werden, sondern insbesondere auch mit kurzen Schweißdrahtabschnitten, beispielsweise Abschnitten mit Längen von 10-30 cm, was einen mobileren Einsatz ermöglicht, insbesondere auch den Zugang für das Schweißen in verwinkelten Arbeitssituationen. Besondere geeignet ist dieser Drahtvorschubantrieb für den Einsatz in Laserhandschweißpistolen, ohne auf diesen Einsatz jedoch beschränkt zu sein.

### Bezugszeichenliste

- 1: Drahtvorschubantrieb
- 2: Lagerteil
- 3: Lagerteil
- 4: Scharniergelenk
- 5: Drehfeder
- 6: angetriebene Förderrolle
- 7: Rotationsachse
- 8: gerändelte Oberfläche
- 9: Antriebsmotor
- 10: passive Förderrolle
- 11: Rotationsachse
- 12: Drahtführungsrohr
- 13: Führungsblock
- 14: Drahtführungsöffnung
- 15: Drahtsensor
- 16: optischer Drehgeber
- α: Winkel
- L: Verbindungslinie
- R: Zuführrichtung
- S: Drahtförderstrecke

## Patentansprüche

1. Drahtvorschubantrieb (1) für das Bewegen eines Schweißdrahts in dessen Längsrichtung und in einer Zuführrichtung (R) mit wenigstens zwei einander entlang einer Drahtförderstrecke gegenüberliegenden, mit radialen Umfangsflächen zum Angreifen an einem zu bewegenden Schweißdraht an jeweils einer Seite des Schweißdrahtes ausgebildeten, um senkrecht zu der Zuführrichtung (R) orientierte und zueinander parallele Rotationsachsen (7, 11) drehbaren Förderrollen (6, 10), von denen wenigstens eine durch einen Antriebsmotor (9) zur Rotation um ihre Rotationsachse (7, 11) antreibbar ist, wobei eine erste (6) der wenigstens zwei Förderrollen (6, 10) in einem ersten Lagerteil (2) zum Drehen um ihre Rotationsachse (7) gelagert ist und eine zweite (10) der wenigstens zwei Förderrollen (6, 10) in einem zweiten Lagerteil (3) zum Drehen um ihre Rotationsachse (11) gelagert ist, wobei das erste (2) und das zweite (3) Lagerteil relativ zueinander um ein Scharniergelenk (4) mit einer zu den Rotationsachsen (7, 11) parallelen Scharnierachse verschwenkbar sind, wobei die beiden Lagerteile (2, 3) mittels einer Andruckkraft in einer Weise vorgespannt sind, dass die radialen Außenflächen der Förderrollen (6, 10) aufeinander zu gezwungen werden, wobei die Rotationsachsen (7, 11) der Förderrollen (6, 10) in der Zuführrichtung (R) gesehen hinter dem Scharniergelenk (4) positioniert sind, **dadurch gekennzeichnet, dass** die erste (6) und die zweite (10) Förderrolle mit ihren Rotationsachsen (7, 11) derart angeordnet sind, dass bei nicht zwischen den Förderrollen eingelegtem Schweißdraht eine Verbindungslinie (L) zwischen den Rotationsachsen (7, 11) die Zuführrichtung (R) unter einem von 90° verschiedenen Winkel (α) schneidet.

2. Drahtvorschubantrieb (1) nach Anspruch 1, **dadurch gekennzeichnet, dass** von den Förderrollen (6, 10) genau eine, nämlich die erste Förderrolle (6), von dem Antriebsmotor (9) zur Rotation um ihre Rotationsachse (7) antreibbar ist und die zweite Förderrolle (10) antriebslos und frei um ihre Rotationsachse (11) drehbar ist.

3. Drahtvorschubantrieb (1) nach Anspruch 2, **dadurch gekennzeichnet, dass** das erste Lagerteil (2) in Bezug auf die Förderstrecke feststehend, das zweite Lagerteil (3) als relativ zu dem ersten Lagerteil (2) und relativ zu der Förderstrecke um das Scharniergelenk (4) verschwenkbarer Lagerarm gebildet ist.

4. Drahtvorschubantrieb (1) nach einem der Ansprüche 2 oder 3, **dadurch gekennzeichnet, dass** die Rotationsachse (11) der zweiten Förderrolle (10) mit einem Rotations-Weg-Sensor (16), insbesondere einem optischen Drehgeber, verbunden ist.

5. Drahtvorschubantrieb (1) nach einem der vorhergehenden Ansprüche, **dadurch gekennzeichnet, dass** im Bereich der Förderrollen (6, 10) ein, insbesondere kapazitiv wirkender, Drahtsensor (15) mit einem hin zu der Förderstrecke wirkenden Sensorbereich angeordnet ist.

6. Drahtvorschubantrieb (1) nach einem der vorhergehenden Ansprüche, **dadurch gekennzeichnet, dass** wenigstens die von dem Antriebsmotor (9) zur Rotation um ihre Rotationsachse (7) angetriebene Förderrolle (6) mit einer umfangsseitigen Rändelung (8) versehen ist.

7. Drahtvorschubantrieb (1) nach einem der vorhergehenden Ansprüche, **gekennzeichnet durch** eine Drahtführung (12, 13, 14) zum Halten und Führen des zu bewegenden Schweißdrahtes entlang der Förderstrecke.

8. Drahtvorschubantrieb (1) nach Anspruch 7, **dadurch gekennzeichnet, dass** die Drahtführung (12, 13, 14) einen Führungsabschnitt (12) aufweist, der zugeführten Schweißdraht bis in den Bereich der Förderrollen (6, 10) führt und in Drahtzuführrichtung (R) gesehen vor den Förderrollen (6, 10) mündet.

9. Drahtvorschubantrieb (1) nach einem der vorhergehenden Ansprüche, **gekennzeichnet durch** eine Stelleinrichtung zum Einstellen der Andruckkraft, mit der die beiden Lagerteile (2, 3) vorgespannt sind.

## Claims

1. Wire advancing drive (1) for moving a welding wire in its longitudinal direction and in an advancing direction (R), having at least two axes of rotation (7) which are opposite one another along a wire advancing path and have radial circumferential surfaces for engaging a welding wire to be moved and are formed on each side of the welding wire,
so as to be oriented perpendicularly to the advancing direction (R) and parallel to one another, (11) rotatable conveyor rollers (6, 10), at least one of which is drivable by a drive motor (9) for rotation about its axis of rotation (7, 11),
wherein a first (6) of said at least two conveyor rollers (6, 10) is mounted in a first bearing part (2) for rotation about its axis of rotation (7) and a second (10) of said at least two conveyor rollers (6, 10) is mounted in a second bearing part (3) for rotation about its axis of rotation (11),
the first (2) and the second (3) bearing parts being pivotable relative to one another about a hinge joint (4) having a hinge axis parallel to the axes of rotation (7,11),
the two bearing parts (2, 3) being prestressed by means of a pressing force in such a way that the radial outer surfaces of the conveyor rollers (6, 10) are forced towards one another, the axes of rotation (7, 11) of the conveyor rollers (6, 10) are positioned behind the hinge joint (4) as seen in the advancing direction (R),
**characterised in that** the first (6) and the second (10) conveyor rollers are arranged with their axes of rotation (7, 11) in such a way that, with welding wire not inserted between the conveyor rollers, a connecting line (L) between the axes of rotation (7, 11) intersects the advancing direction (R) at an angle (a) different from 90°.

2. A wire advancing drive (1) according to claim 1, **characterised in that** exactly one of the conveyor rollers (6, 10), namely the first conveyor roller (6), can be driven by the drive motor (9) for rotation about its axis of rotation (7) and the second conveyor roller (10) can be rotated drivelessly and freely about its axis of rotation (11).

3. A wire advancing drive (1) according to claim 2, **characterised in that** the first bearing part (2) is fixed with respect to the conveying path, the second bearing part (3) is formed as a bearing arm pivotable about the hinge joint (4) relative to the first bearing part (2) and relative to the conveying path.

4. A wire advancing drive (1) according to one of claims 2 or 3, **characterised in that** the axis of rotation (11) of the second conveyor roller (10) is connected to a rotation-displacement sensor (16), in particular an optical rotary encoder.

5. A wire advancing drive (1) in accordance with one of the preceding requirements, **characterised in that** a wire sensor (15), which acts in particular capacitively, is arranged in the region of the conveying rollers (6, 10) with a sensor region acting towards the conveying path.

6. A wire advancing drive (1) according to one of the preceding claims, **characterised in that** at least the conveyor roller (6) driven by the drive motor (9) for rotation about its axis of rotation (7) is provided with a peripheral knurling (8).

7. A wire advancing drive (1) according to one of the preceding claims, **characterised by** a wire guide (12, 13, 14) for holding and guiding the welding wire to be moved along the conveying path.

8. A wire advancing drive (1) according to claim 7, **characterised in that** the wire guide (12, 13, 14) has a guide section (12) which guides the supplied welding wire as far as into the region of the advancing rollers (6, 10) and, seen in the wire advancing direction (R), opens out in front of the advancing rollers (6, 10).

9. A wire advancing drive (1) according to one of the preceding claims, **characterised by** an adjusting device for adjusting the pressure force with which the two bearing parts (2, 3) are prestressed.

## Revendications

1. Entraînement d'avance pour un fil (1) pour déplacer un fil de soudure dans sa direction longitudinale et dans une direction d'avance (R), comportant au moins deux axes de rotation (7) opposés l'un à l'autre le long d'un trajet d'avance pour un fil et présentant des surfaces périphériques radiales pour engager un fil de soudure à déplacer et formés de chaque côté du fil de soudure,
de façon à s'orienter perpendiculairement à la direction d'avance (R) et parallèlement l'un à l'autre, (11) des rouleaux de transport rotatifs (6, 10), dont au moins l'un peut être entraîné en rotation autour de son axe de rotation (7, 11) par un moteur d'entraînement (9),
un premier (6) desdits au moins deux rouleaux de transport (6, 10) étant monté dans une première partie de palier (2) pour tourner autour de son axe de rotation (7) et un second (10) desdits au moins deux rouleaux de transport (6, 10) est monté dans une seconde partie de palier (3) pour tourner autour de son axe de rotation (11),
les première (2) et seconde (3) parties de palier pouvant pivoter l'une par rapport à l'autre autour d'un joint articulé (4) ayant un axe de charnière parallèle aux axes de rotation (7, 11),
les deux parties de palier (2, 3) étant précontraintes par une force de compression de telle sorte que les surfaces extérieures radiales des rouleaux de convoyeur (6, 10) sont poussées l'une contre l'autre, les axes de rotation (7, 11) des rouleaux de convoyeur (6, 10) sont positionnés derrière le joint d'articulation (4) comme on le voit dans la direction d'avance (R),
**caractérisé en ce que** les premier (6) et second (10) rouleaux de transport sont disposés avec leurs axes de rotation (7, 11) de telle manière que, avec un fil de soudure non inséré entre les rouleaux de transport, une ligne de liaison (L) entre les axes de rotation (7, 11) coupe la direction d'avance (R) selon un angle (a) différent de 90°.

2. Entraînement d'avance de fil (1) selon la revendication 1, **caractérisé en ce que** l'un exact des rouleaux de transport (6, 10), à savoir le premier rouleau de transport (6), peut être entraîné en rotation autour de son axe de rotation (7) par le moteur d'entraînement (9) et le second rouleau de transport (10) peut tourner sans entraînement et librement autour de son axe de rotation (11).

3. Entraînement d'avance de fil (1) selon la revendication 2, **caractérisé en ce que** la première partie de palier (2) est fixée par rapport au trajet de transport, la seconde partie de palier (3) est réalisée sous la forme d'un bras de palier pivotant autour du joint articulé (4) par rapport à la première partie de palier (2) et par rapport au trajet de transport.

4. Entraînement d'avance de fil (1) selon l'une des revendications 2 ou 3, **caractérisé en ce que** l'axe de rotation (11) du second rouleau de transport (10) est relié à un capteur de rotation-déplacement (16), en particulier un codeur rotatif optique.

5. Entraînement d'avance de fil (1) selon l'une des revendications précédentes, **caractérisé en ce qu'**un capteur de fil (15), qui agit en particulier de manière capacitive, est disposé dans la zone des rouleaux de transport (6, 10) avec une zone de capteur agissant vers la voie de transport.

6. Entraînement d'avance de fil (1) selon l'une des revendications précédentes, **caractérisé en ce qu'**au moins le rouleau de transport (6) entraîné par le moteur d'entraînement (9) pour tourner autour de son axe de rotation (7) est muni d'une molette périphérique (8).

7. Entraînement d'avance de fil (1) selon l'une des revendications précédentes, **caractérisé par** un guide de fil (12, 13, 14) pour maintenir et guider le fil de soudure à déplacer le long du trajet de transport.

8. Entraînement d'avance de fil (1) selon la revendication 7, **caractérisé en ce que** le guidage de fil (12, 13, 14) présente une section de guidage (12) qui guide le fil à souder fourni jusqu'à la zone des rouleaux d'avance (6, 10) et, vu dans la direction d'avance de fil (R), s'ouvre devant les rouleaux d'avance (6, 10).

9. Entraînement d'avance de fil (1) selon l'une des revendications précédentes, **caractérisé par** un dispositif de réglage pour régler la force de pression avec laquelle les deux parties de palier (2, 3) sont précontraintes.
